# EUROPÄISCHE PATENTSCHRIFT

(11) **EP 1 448 048 B1**
(45) Veröffentlichungstag und Bekanntmachung des Hinweises auf die Patenterteilung: **16.08.2006**
(21) Anmeldenummer: 02803733.1
(22) Anmeldetag: 02.12.2002
(51) Int. Cl.: A01K 13/00, A47L 13/18

(54) **REINIGUNGSHANDSCHUH, VERWENDUNG DES HANDSCHUHS ALS TIERPFLEGEHANDSCHUH UND TIERPFLEGESET**
CLEANING MITT, USE OF SAID MITT AS AN ANIMAL GROOMING MITT AND AN ANIMAL GROOMING KIT
GANT DE NETTOYAGE, SON UTILISATION COMME GANT POUR SOINS POUR LES ANIMAUX, ET JEUX DE GANTS Y RELATIFS

(30) Priorität: 30.11.2001 CH 219401
(43) Veröffentlichungstag der Anmeldung: 25.08.2004
(73) Patentinhaber: Sanamundi Aktiengesellschaft, 9496 Balzers (LI)
(72) Erfinder: FOSER, Manfred, FL-9496 Balzers (LI)
(74) Vertreter: Hasler, Erich
(86) Internationale Anmeldenummer: PCT/CH2002/000652
(87) Internationale Veröffentlichungsnummer: WO 2003/045135

(56) Entgegenhaltungen:
- BE-A- 536 931
- DE-A- 19 514 462
- US-A- 3 749 064
- US-A- 4 670 930
- US-A- 4 980 943

## Beschreibung

Die Erfindung betrifft einen Handschuh gemäss Oberbegriff von Anspruch 1, die Verwendung des Handschuhs als Tierpflegehandschuh sowie ein Tierpflegeset gemäss Anspruch 16 oder 17.

Für Haustiere sind verschiedene Pflegemittel im Handel erhältlich. Dazu zählen insbesondere eine Vielzahl verschiedener Waschmittel sowie Bürsten und Kämme für die Pflege des Felles. Bürsten haben den Vorteil, dass Sie gut mit der Hand gehalten werden können. Sie eignen sich in erster Linie, um lose Haare aus dem Fell zu entfernen. Die US 3,749,064 betrifft eine Vorrichtung zum Baden von Hunden, nämlich zum Waschen, Trocknen und Besprühen oder Entflohen von Hunden. Die Vorrichtung besteht aus einem Gehäuse, an welchem seitlich je ein Handschuh befestigt ist. Die Handschuhe können mit Bürsten, Rippen, Borsten oder einem Schwamm ausgestattet sein. Die verschiedenen Arbeitsflächen können dabei auf die Handfläche des Handschuhs aufgeklipst oder aufgezogen werden. Gemäss einer besonderen Ausführungsform ist auf einer Handschuhseite ein Schwamm und auf der anderen Handschuhseite ein Kamm oder eine Bürste vorgesehen.

Die US 4,902,283 betrifft einen Fäustling zum Reinigen von Bébies. Der Fäustling besteht aus mehren Lagen, welche an drei Seiten unter Bildung eines sackartigen Handschuhs oder Fäustlings miteinander verbunden sind. Die einander gegenüberliegenden inneren Lagen des Fäustlings bestehen aus wasserundurchlässigen Kunststofflagen, welche von äusseren, saugfähigen Lagen aus Baumwollmaterial oder Ähnlichem umgeben sind. Nach dem Gebrauch wird der Fäustling umgestülpt, das offene Ende verschlossen und entsorgt. Zur Erleichterung des Umstülpens ist an der Innenseite, im Bereich der Fingerspitzen, ein Ring vorgesehen, durch welchen der Mittelfinger gesteckt werden kann. Zieht der Benutzer am Ring, so wird der Handschuh nach innen gestülpt. Der Ring kann während des Gebrauchs auch zur Fixierung des Handschuhs an der Hand dienen.

Die US 4,670,930 offenbart einen Reinigungshandschuh in Taschenform mit einer Öffnung zur Aufnahme der Hand des Benutzers. Der Reinigungshandschuh dient insbesondere der Reinigung von Autos. Die Aussenseiten des Handschuhs sind mit unterschiedlichen Reinigungsoberflächen ausgestattet. Die Vorderseite des Handschuhs hat eine haarige Oberfläche zur Reinigung von glatten Oberflächen wie Glas, Metall oder Plastik. Die Rückseite hingegen ist mit Borsten ausgestattet. Damit der Reinigungshandschuh nicht von der Hand des Benutzers rutscht, ist die Öffnung des Handschuhs kleiner als der übrige Handschuhkörper gefertigt.

Die EP-A-0 512 695 offenbart ein flächiges, poröses, dreidimensionales Material zum Bürsten von Tieren. Das flächige Material ist mittels eines Riemens an der Hand befestigbar. Gemäss einer ersten Ausführungsform sind zwei Lagen des Materials durch Verschweissen der Kanten zu einem Fäustling zusammengefügt Im Bereich des Handgelenks ist der Fäustling enger gestaltet, sodass dieser bei der Benutzung nicht ohne Weiteres von der Hand schlüpfen kann. Gemäss einer anderen Ausführungsform ist das flächige Material an der Rückseite mit einem Riemen ausgestattet, um es an der Hand des Benützers zu fixieren.

Die DE-OS-19514 462 offenbart einen Putzhandschuh, dessen Reinigungsseiten aus textilem Gewebe, Mikrofasern oder anderen textilähnlichen Fasern aus Kunststoff bestehen können. Der Handschuh hat Fingerhüllen für jeweils zwei Finger und den Daumen ausgebildet. Durch die Bündelung der Finger in drei Greiforgane kann der zu reinigende Gegenstand gut gehalten werden. Die DE-OS-195 14 462 gibt jedoch keine Anregungen dazu, die beiden Reinigungsseiten des Handschuhs mit unterschiedlichen Fasern auszubilden.

Ganz allgemein besteht ein Bedürfnis nach einem effizienten Reinigungsmittel, welches sich leicht anwenden lässt und mit welchem feiner, sowie gröberer und stark haftender Schmutz von glatten oder strukturierten Oberflächen entfernt werden kann.

Aufgabe der vorliegenden Erfindung ist es, einen Handschuh bereitzustellen, welcher sich für das Reinigen von glatten oder strukturierten Oberflächen, insbesondere von Lack-oder Kunststoffflächen von Kraftfahrzeugen, besonders gut eignet. Ein anderes Ziel ist es, einen Handschuh zur Verfügung zu stellen, welcher gut in der Hand liegt und von Personen jeden Alters oder Grösse gehalten werden kann. Noch ein Ziel ist es, ein Pflegemittel für Tierfelle bereitzustellen, mit welchem nicht nur Haare, sondern auch Fremdstoffe aus dem Fell entfernbar sind. Ein anderes Ziel ist es, Mittel vorzuschlagen, mit welchem dem Tierfell Pflege- und/oder Nährstoffe zugeführt werden können.

Erfindungsgemäss wird die Aufgabe bei einem Reinigungshandschuh gemäss Oberbegriff von Anspruch 1 dadurch gelöst, dass die Fasern der ersten Reinigungscherfläche Mikrofasern sind und die Borstenbüscheln aus Bändchergarn oder Multifilgarn gebildet sind, wobei das Bändchengarn oder Multifilgarn in eine vielzahl von einzehen Börstchen aufgefächert oder aufgespalten ist. Ein bürstenartiger Besatz hat den Vorteil, dass mit diesem auch hartnäckige Flecken, wie Fliegen- oder Insektenkot, oder anderer stark haftender Schmutz von glatten oder strukturierten Oberflächen entfernbar sind. Der borstenartige Besatz kann durch Naturborsten oder Kunststoffborsten gebildet sein. Obwohl grundsätzlich die verschiedensten Kunststoffe eingesetzt werden können, sind Polyester-, Polyamin- oder Polycarbonat-Kunststoffe bevorzugt.

Gemäss der Erfindung sind nicht Einzelborsten, sondern Borstenbüschel eingesetzt, welche jeweils aus einer Mehrzahl von dünnen Einzelborsten bestehen. Die Einzelborsten können im Querschnitt rund oder flach sein. Erfindungsgemäss sind die Borstenbüschel aus Bändchengarn oder Multifilfasern hergestellt. Dies ist eine einfache und kostengünstige Herstellungsart, da ein Bändchengarn oder Multifilgarn sich in eine Vielzahl von einzelnen Börstchen auffächern oder aufgespalten werden kann oder sich unter Zuhilfenahme von mechanischen Mitteln aufsplitten lässt. Als Bändchengarn ist im Rahmen der vorliegenden Erfindung ein aus einem oder mehreren Bändchen gesponnenes Garn zu verstehen, wobei das oder die Bändchen zusätzlich fibrilliert sein können. Fibrillierte Bändchen haben den Vorteil, dass diese eine verbesserte mechanische Reinigungswirkung haben. Die Borstenbüschel haben zweckmässigerweise eine Länge zwischen 2 und 8 mm, vorzugsweise eine solche zwischen 2 und 6 mm, und ganz besonders bevorzugt eine solche zwischen ungefähr 3 und 5 mm.

Die Borsten sind zweckmässigerweise zu einem Borstenbüschel zusammengefasst und an diskreten Punkten im Grundgewebe der zweiten Reinigungsseite verankert. Durch das Vorsehen von Borstenbüscheln ist eine hohe Dichte von einzelnen Börstchen realisiert. Die Borstenbüschel sind vorzugsweise in gleichmässigen Abständen voneinander angeordnet. Die Herstellung des bürstenartigen Besatzes kann erfolgen, indem die Borsten oder Borstenbüschel als Polfäden in das Grundmaterial eingebracht werden. Dies kann durch Tuften oder andere dem Fachmann bekannte Herstellungsverfahren erfolgen. Vorzugsweise wird zuerst ein Doppelgewebe hergestellt, welches durch Polfäden verbunden ist. Die Polfäden werden sodann durchtrennt, sodass an beiden Gewebeflächen ein bürstenartiger Besatz resultiert. Die Borsten oder Borstenbüschel sind vorzugsweise in regelmässigen Abständen voneinander angeordnet. Die Abstände der einzelnen Borstenbüschel voneinander können zwischen 0.1 und 4 mm, vorzugsweise 1 mm bis 3 mm betragen. Ganz besonders bevorzugt ist ein mittlerer Abstand der Borstenbüschel voneinander von durchschnittlich 1.5 Millimeter bis ungefähr 2.5 Millimeter. Vorzugsweise sind Borstenbüschel bestehend aus einer Mehrzahl von Einzelborsten in Reihen angeordnet und an diskreten Stellen im Grundgewebe verankert. Dabei sind die Borstenbüschel benachbarter Reihen vorzugsweise jeweils versetzt zueinander angeordnet. Der Abstand der Reihen voneinander beträgt vorzugsweise zwischen 1 mm und 2 mm und ganz besonders bevorzugt ungefähr 1.5 mm. Die Borsten können aus Polyester, Polyamid, Polyolefin, Polyacrylnitril oder anderen Polymeren hergestellt sein.

Vorteilhaft weist die erste Reinigungsseite einen Flor aus Mikrofasern auf. Die Mikrofasern des Flors weisen zweckmässigerweise eine Stärke bis maximal 5 dtex, vorzugsweise bis maximal 2 dtex, und ganz besonders bevorzugt eine Stärke bis maximal 1 dtex auf. Die Mikrofasern sind vorzugsweise aus einem nicht saugfähigen Material wie z.B. Polyester, Polyamid, Polyolefin, Polyacrylnitril oder anderen polymeren Kunststoffen hergestellt. Fäden aus solch dünnen Mikrofasern können durch Kapillarwirkung relativ viel Feuchtigkeit aufnehmen und - weil die Mikrofasern selbst nicht saugfähig sind - entsprechend leicht wieder abgeben. Ausserdem haben Mikrofasern eine mechanische Reinigungswirkung. Die Mikrofasern sind vorteilhaft als Fäden zusammengefasst, die in der Reinigungsseite als Polfäden verankert sind. Dem Fachmann sind verschiedene Fertigungstechniken bekannt, um Polfäden in ein Grundmaterial (Gewirke oder Gewebe) einzubringen. Vorzugsweise werden zwei Grundgewebe hergestellt, die zunächst durch Polfäden miteinander verbunden sind. Durch Aufschneiden der Polfäden in der Mitte, entstehen zwei Gewebe mit abstehenden Polfäden. Die Fäden aus einer Vielzahl von Mikrofasern können auch als Schlaufen oder Schlingen (Schlingenpol) ausgebildet sein.

Weitere vorteilhafte Weiterbildungen des erfindungsgemässen Handschuhs sind in den Unteransprüchen definiert.

Vorzugsweise ist der Handschuh sackartig mit einer Öffnung zum Einführen einer Hand und hat an wenigstens einer Innenseite des Handschuhs eine Schlaufe angeordnet, in welche eine Hand oder einzelne Finger steckbar sind. In die Schlaufe sind - je nach Handbreite - zwei bis vier Finger steckbar. Sind die Finger in der Schlaufe aufgenommen, ist ein relatives Verrutschen von Hand und Handschuh wirksam verhindert.

Vorzugsweise besteht der Handschuh aus zwei Lagen mit unterschiedlichen Reinigungsoberflächen, welche an drei Umfangsseiten miteinander verbunden sind. Die Verbindung der beiden Lagen erfolgt zweckmässigerweise durch Vernähen. Vorteilhaft ist die Schlaufe weniger breit als die Breite der die Reinigungsoberflächen aufweisenden Lagen. Dies hat den Vorteil, dass zwischen der Schlaufe und dem Rand der Lage, an welcher die Reinigungsoberfläche ausgebildet ist, ein Streifen Material verbleibt, welcher sich beim Putzen von Ecken aufstellen oder in Spalten eindringen kann. Zweckmässigerweise ist die Schlaufe in der vorderen Hälfte des Handschuhs und in Abstand zur Handschuhspitze angeordnet. Das heisst, die Schlaufe umfasst bei eingeführter Hand die Finger im Bereich zwischen den metakarpalen Fingergelenken und den inter-phalangealen Fingergelenken.

Zweckmässigerweise ist die Schlaufe aus einem textilen oder einem Kunststoffband gebildet. Obwohl grundsätzlich ein nicht-nachgiebiges oder unelastisches Band als Schlaufe einsetzbar ist, ist die Schlaufe vorzugsweise aus einem nachgiebigen oder elastischen Band gebildet. Ein elastisches Band hat den Vorteil, dass sich dieses jeder Handbreite anpassen kann und einen optimalen Halt verleiht. Damit beide Oberflächen des Pflegehandschuhs wirkungsvoll eingesetzt werden können, sind vorzugsweise an beiden Innenseiten des Handschuhs wenigstens je eine Schlaufe angeordnet. Wird von einer Reinigungsseite auf die andere gewechselt, so kann die Hand in die Schlaufe an der gegenüberliegenden Innenseite gesteckt werden.

Zweckmässgerweise ist ein bürstenartiger Besatz erhältlich durch Herstellung zweier textiler Flächengebilde oder Gewebe, welche durch aus Bändchengarn oder Multifilgarn bestehenden Polfäden miteinander verbunden sind, Verfestigen der Polfäden im Grundgewebe, z.B. durch Imprägnieren, Kleben oder Verschweissen und Aufschneiden der Polfäden vorzugsweise in der Mitte, sodass zwei Grundgewebe mit einem bürstenartigen Besatz gebildet sind. Zur Bildung von Borstenbüscheln können die einzelnen Multifilgarn- oder Bändchengarnborsten zusätzlich mit mechanischen Mitteln aufgespalten werden, sodass Borstenbüschel gebildet sind.

Gegenstand der vorliegenden Erfindung ist auch die Verwendung des oben beschriebenen Handschuhs als Tierpflegehandschuh. Obwohl im Bereich der Tierpflege bereits die verschiedensten Hilfsmittel eingesetzt werden, wurde bislang noch nicht daran gedacht, das Tierfell mit Mikrofaseroberflächen zu pflegen resp. zu reinigen. Zur Überraschung des Erfinders hat sich gezeigt, dass durch regelmässige Pflege des Tierfells mit Mikrofasern resp. mit einer Mikrofaser-Reinigungsoberfläche beispielsweise bei Hunden die Bildung von unangenehmen Gerüchen weitgehend unterdrückt werden konnte. Dies dürfte damit zusammenhängen, dass die an den Haaren haftenden, vom Tier abgesonderten und zur Geruchsbildung neigenden Stoffe durch die Mikrofasern mindestens teilweise entfernt werden. Ein besonders vorteilhafter Tierfellpflegehandschuh ergibt sich dadurch, dass eine zweite Reinigungsoberfläche mit Borsten vorgesehen ist. Mit dem bürstenartigen Besatz lässt sich ein Tierfell gründlich durchkämmen und Schuppen und feste und gelöste Fremdstoffe aus dem Fell entfernen. Ausserdem wird das Fell durch den bürstenartigen Besatz aufpoliert.

Durch die Ausbildung einer ersten Reinigungsoberfläche des Handschuhs mit Mikrofasern und einer zweiten Reinigungsoberfläche mit Borstenbüscheln ist ein effizientes Werkzeug für die Tierfellpflege bereitgestellt. Die vorzugsweise aus einem selbst nicht saugfähigen Kunststoffmaterial hergestellten Mikrofasern eignen sich hervorragend für die Befeuchtung des Tierfells, wenn genügend dünne Mikrofasern eingesetzt werden. Dies heisst, dass insbesondere die Feinheit der eingesetzten Mikrofasern eine Rolle spielt. Durch die Verwendung von besonders dünnen Mikrofasern von vorzugsweise weniger als 5 dtex und ganz besonders bevorzugt von weniger als 1 dtex Stärke, kann relativ viel Wasser durch Kapillarwirkung aufgenommen und gebunden werden. Das durch Kapillarwirkung in resp. zwischen den Mikrofasern festgehaltene Wasser, wird beim Kontaktieren mit dem Fell leicht an dieses abgegeben. Mit dem bürstenartigen Besatz kann die von den Mikrofasern abgegebene Feuchtigkeit in das Fell eingearbeitet werden. Ausserdem können die Borsten Fremdstoffe aus dem Fell herausarbeiten. Durch die Pflege mit dem Tierfellpflegehandschuh wird das Tierfell poliert und erhält einen schönen Glanz.

Gegenstand der vorliegenden Erfindung ist auch ein Tierfellpflegeset mit einem Tierfellpflegehandschuh gemäss einem der Ansprüche 1 bis 14, sowie einer Spraydose zur Aufnahme einer Nähr- und/oder Pflegelösung für ein Tierfell. Die Nährund/ oder Pflegelösung beinhaltet vorzugsweise natürliche Stoffe zur Pflege und Reinigung des Tierfelles. Zweckmässigerweise beinhaltet die Nähr- und/oder Pflegelösung Ayurved'sche Stoffe. Die Stoffe können antiseptisch, geruchsbindend sein. Vorteilhaft ist die Nähr- und/oder Pflegelösung wässrig.

Nachfolgend wird die Erfindung unter Bezugnahme auf die Figuren näher erläutert. Es zeigt:
- Figur 1:: einen erfindungsgemässen Handschuh in perspektivischer Ansicht;
- Figur 2:: den Handschuh von Figur 1 umgestülpt;
- Figur 3:: einen Blick von vorne in den sackartigen Handschuh;
- Figur 4:: ein Tierfellpflegeset aus einem Tierfellpflegehandschuh und einer Sprayflasche zur Aufnahme einer Pflege- und oder Reinigungslösung.

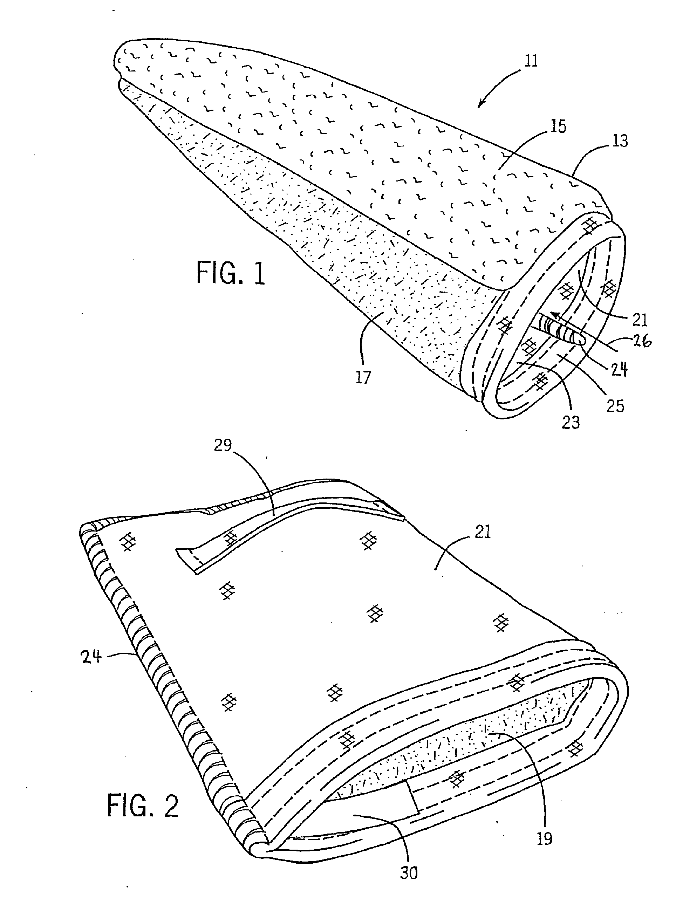

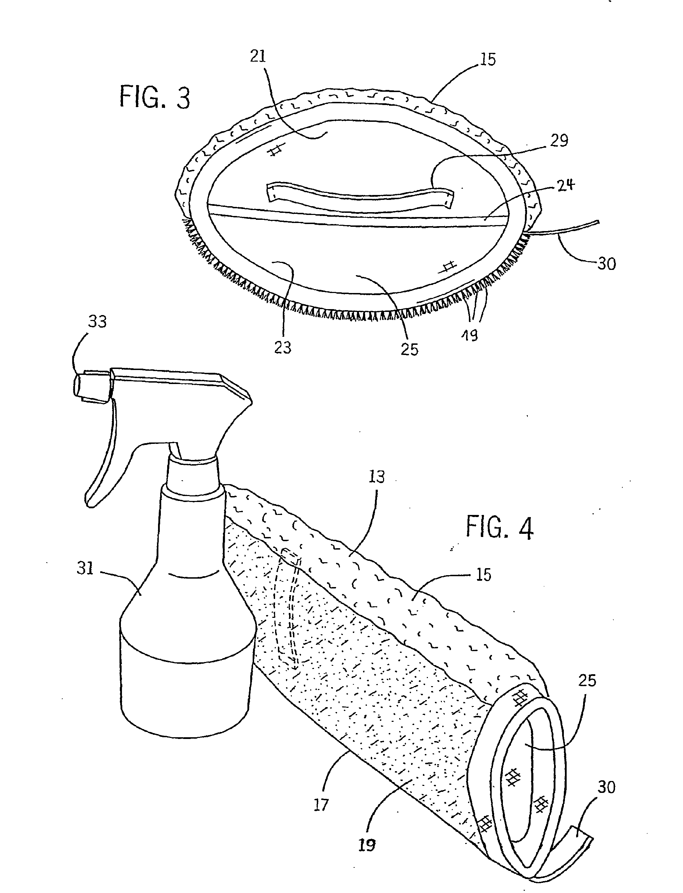

Der Handschuh 11 gemäss den Figuren 1 bis 3 besitzt eine erste Reinigungsoberfläche 13, welche einen Flor aus Mikrofasern 15 hat, und eine zweite Reinigungsoberfläche 17, welche einen bürstenartigen Besatz 19 aufweist. Mikrofasern 15 und bürstenartiger Besatz 19 sind in bekannter Weise jeweils in nicht näher dargestellten Grundmaterialien (Gewirke, Gestricke oder vorzugsweise Gewebe) 21 resp. 23 verankert. Die Grundmaterialien 21,23 sind rechteckförmige Abschnitte, deren Ränder entlang dreier Seitenkanten mittels einer Naht 24 zusammengenäht sind. Der Pflegehandschuh hat eine Öffnung 25, durch welche eine Hand in einer Einführungsrichtung 26 (Pfeil) in den als Fäustling ausgebildeten Handschuh einführbar ist.

Die erste Reinigungsseite hat einen Besatz mit Mikrofasern. Die Mikrofasern haben eine Stärke bis maximal 50 dtex, vorzugsweise maximal 25 dtex, und ganz besonders bevorzugt eine solche von maximal 10 dtex. Gemäss einer besonders bevorzugten Ausführungsvariante haben die Fasern eine Stärke zwischen 0.1 und 2 dtex. Jeweils eine Vielzahl von Mikrofasern sind zu Fäden zusammengefasst und im Grundgewebe eingebunden. Die Länge der abstehenden Fäden beträgt mehr als 1 mm, vorzugsweise mehr als 5 mm und ganz besonders bevorzugt mehr als 8 mm. Die Fäden sind vorzugsweise als Schlingen ausgebildet, welche im gestreckten Zustand eine Länge von vorzugsweise wenigstens 5 mm und ganz besonders bevorzugt zwischen 7 mm und 15 mm besitzen. Der Besatz von Mikrofasern ist so dicht, dass eine flauschige, geschlossene Oberfläche resultiert.

Der bürstenartige Besatz der zweiten Reinigungsseite besteht aus einer Vielzahl von diskret verankerten Borstenbüscheln. Die Börstchen der Borstenbüschel sind vorzugsweise aus Polypropylen, Polyester, Polyamin, Polycarbonat oder dergleichen hergestellt, wobei Polypropylen bevorzugt ist. Ein Borstenbüschel hat im Mittel wenigstens 10, vorzugsweise mehr als 20 und ganz besonders bevorzugt zwischen 5 und 50 Börstchen. Als Börstchen gelten die in einem Borstenbüschel auszumachenden Borstenspitzen. Die Börstchen sind zu Borstenbüschel zusammengefasst und derart im Gewebe verankert, dass diese aufrecht, vorzugsweise in einem annähernd rechten Winkel, von der Oberfläche abstehen. Zur Verfestigung der Borsten können diese zusätzlich im Grundmaterial oder -gewebe imprägniert, verklebt oder verschmolzen sein. Die zähelastischen Borsten stehen vorzugsweise in einer Länge von mehr als 2 mm und vorzugsweise mehr als 3 mm bis maximal 5 mm ungefähr senkrecht vom Grundgewebe ab. Als besonders vorteilhaft hat sich eine Borstenlänge zwischen 2 mm und 3.5 mm erwiesen. Die Borsten und Mikrofasern können unterschiedlich eingefärbt sein, um die verschiedenen Funktionalitäten der beiden gegenüberliegenden Reinigungsseiten zu kennzeichnen.

Zweckmässigerweise ist an der Innenseite 27 des Handschuhs 11 eine Schlaufe 29 vorgesehen (Fig. 2). Die Schlaufe 29 befindet sich in der vorderen Hälfte des Pflegehandschuhs und ist weniger breit als der Handschuh 11. In die Schlaufe 29 sind - je nach Breite der Hand - die ganze Hand oder einzelne Finger einführbar. Ist die Hand oder sind die Finger in die Schlaufe eingeführt, ist ein Verrutschen der Hand während bei der Benutzung des Handschuhs, z.B. für die Tierfellpflege, wirksam verhindert. Die Schlaufe 29 ist vorzugsweise ein elastisches, längenveränderbares Band aus Textil oder Kunststoff.

Mittels einer zweiten Schlaufe 30, welche seitlich am Handschuh angenäht ist, kann der Handschuh an einem Haken aufgehängt werden.

Der zur Tierpflege verwendbase Handschuh ist besonders geeignet für die feuchte Pflege eines Tierfells. Erfindungsgemäss ist deshalb eine Tierfellpflegeset mit einem Tierfellpflegehandschuh und einer Sprayflasche 31 vorgeschlagen. Die Sprayflasche besitzt eine Düse 33 zur Zerstäubung eines in ihr aufgenommenen flüssigen Inhalts. Das Tierfellpflegeset ist besonders geeignet für die Applikation von Nähr- und Pflegelösungen auf das Tierfell. Diese können auch Zusatzstoffe für die Geruchsbindung, antiseptische Stoffe etc. enthalten. Vorzugsweise werden Ayurved'sche Lösungen verwendet.

Der Tierfellpflegehandschuh resp. das Tierfellpflegeset wird folgendermassen angewendet: In die Sprayflasche wird die gewünschte wässrige Pflegelösung abgefüllt. Mit der Düse wird sodann die Mikrofaserseite des Pflegehandschuhs befeuchtet. Durch Kapillarwirkung dringt die wässerige Lösung in die Mikrofaser-Reinigungsseite ein. Sodann wird die Feuchtigkeit auf das Tierfell übertragen, indem die Mikrofaser-Reinigungsoberfläche mit sanftem Druck über das Tierfell gefahren wird. Diese Anwendung kann mehrmals wiederholt werden, bis das ganze Tierfell befeuchtet ist. Sodann wird das Tierfell mit dem bürstenartigen Besatz bearbeitet. Die feinen Borsten der zweiten Reinigungsseite verteilen die Feuchtigkeit im ganzen Fell und entfernen gleichzeitig Fremdstoffe. Durch die beschriebene Pflege wird das Tierfell aufpoliert und erhält einen natürlichen Glanz.

### Ausführungsbeispiel:

| | |
|---|---|
| Polgewebe: | PP (Polypropylen) |
| Rückengewebe: | PES (Polyethersulfon) |
| Flächengewicht: | 380 g/m² |
| Gesamtdicke der zweiten Reinigungsoberfläche bei aufgerichtetem Pol | 3 mm |
| Länge der Schlingen | 10 mm |

Die oben beschriebene Erfindung betrifft ein Handschuh sowie ein Tierfellpflegeset. Der Handschuh hat wenigstens eine erste mit Mikrofasern besetzte Reinigungsoberfläche und eine zweite Reinigungsoberfläche mit einem bürstenartigen Besatz. Die Mikrofaserseite kann durch Kapillarwirkung relativ viel Feuchtigkeit aufnehmen. Die Feuchtigkeit wird aber wiederum leicht an ein zu pflegendes Tierfell abgegeben, wenn dieses mit der Mikrofaserseite bearbeitet wird. Mit dem aus einzelnen Borstenbüscheln bestehenden bürstenartigen Besatz wird die Feuchtigkeit in das Fellinnere gebracht und gleichzeitig Fremdstoffe aus dem Fell herausgearbeitet. Der Handschuh besitzt an der Innenseite eine Schlaufe, in welche einzelne Finger oder gegebenenfalls die ganz Hand gesteckt werden kann. Die Schlaufe sorgt für einen guten Halt und dafür, dass die Hand im Handschuh nicht verrutschen kann.

### Legende:

- 11: Reinigungs- und/oder Pflegehandschuh
- 13: erste Reinigungsseite
- 15: Mikrofasern
- 17: zweite Reinigungsseite
- 19: bürstenartiger Besatz
- 21: Grundgewebe der Mikrofaserseite
- 23: Grundgewebe des bürstenartigen Besatzes
- 24: Naht
- 25: Öffnung des Handschuhs
- 26: Einführungsrichtung
- 27: Innenseite
- 29: Schlaufe
- 30: zweite Schlaufe zum Aufhängen des Handschuhs
- 31: Sprayflasche
- 33: Düse

## Patentansprüche

1. Reinigungshandschuh mit zwei unterschiedlichen Reinigungsoberflächen, einer ersten Reinigungsoberfläche (13), welche mit Fasern (15) besetzt ist, und einer zur ersten Reinigungsoberfläche (13) unterschiedlichen, zweiten Reinigungsoberfläche (17), welche mit einem bürstenartigen Besatz (19) aus einer Vielzahl von in Abstand voneinander angeordneten Borstenbüscheln besetzt ist
**dadurch gekennzeichnet,**
**dass** die Fasern der ersten Reinigungsoberfläche (13) Mikrofasern (15) sind und die Borstenbüscheln aus Bändchengarn oder Multifilgarn gebildet sind, wobei das Bändchengarn oder Multifilgarn in eine Vielzahl von einzelnen Börstchen aufgefächert oder aufgespalten ist.

2. Handschuh nach Anspruche 1, **dadurch gekennzeichnet, dass** die erste Reinigungsseite (13) des Handschuhs einen Flor aus Mikrofasern (15) aufweist.

3. Handschuh nach Anspruch 2, **dadurch gekennzeichnet, dass** die Mikrofasern (15) des Mikrofaserflors eine Stärke bis maximal 5 dtex, vorzugsweise bis maximal 2 dtex, und ganz besonders bevorzugt eine Stärke bis maximal 1 dtex aufweisen.

4. Handschuh nach einem der Ansprüche 1 bis 3, **dadurch gekennzeichnet, dass** die erste Reinigungsseite (13) mit aus Mikrofasern gebildeten (Pol-)Fäden oder Schlingen (Schlaufen) besetzt ist.

5. Handschuh nach einem der Ansprüche 1 bis 4, **dadurch gekennzeichnet, dass** die Mikrofasern in gestrecktem Zustand eine Länge zwischen 7 und 15 mm besitzen.

6. Handschuh nach einem der Ansprüche 1 bis 5, **dadurch gekennzeichnet, dass** der bürstenartige Besatz (19) Borsten aus Polyester, Polyamid oder Polypropylen hat.

7. Handschuh nach einem der Ansprüche 1 bis 6, **dadurch gekennzeichnet, dass** ein Borstenbüschel im Mittel wenigstens 10, vorzugsweise mehr als 20 und ganz besonders bevorzugt zwischen 5 und 50 Börstchen aufweist

8. Handschuh nach einem der Ansprüche 1 bis 7, **dadurch gekennzeichnet, dass** an mindestens einer Innenseite des Handschuhs wenigstens eine Schlaufe vorgesehen ist, in welche eine Hand oder mehrere einzelne Finger steckbar sind.

9. Handschuh nach Anspruch 8, **dadurch gekennzeichnet, dass** die Schlaufe (29) aus einem textilen Band oder einem Kunststoffband besteht.

10. Handschuh nach Anspruch 8 oder 9, **dadurch gekennzeichnet, dass** die Schlaufe (29) aus einem nachgiebigen oder elastischen Band besteht.

11. Handschuh nach einem der Ansprüche 8 bis 10, **dadurch gekennzeichnet, dass** die Schlaufe (29) weniger breit als die Öffnung zum Einführen der Hand ist.

12. Handschuh nach einem der Ansprüche 8 bis 11, **dadurch gekennzeichnet, dass** die Schlaufe (29) in der vorderen Hälfte des Handschuhs und in Abstand zur Handschuhspitze angeordnet ist.

13. Handschuh nach einem der Ansprüche 1 bis 12, **dadurch gekennzeichnet, dass** der Handschuh aus zwei Lagen besteht, welche an drei Umfangsseiten miteinander verbunden sind.

14. Handschuh nach einem der Ansprüche 1 bis 13, **dadurch gekennzeichnet, dass** an beiden Innenseiten des Handschuhs wenigstens je eine Schlaufe (29) angeordnet ist.

15. Handschuh nach einem der Ansprüche 1 bis 14 zur Verwendung als Tierfellpflegehandschuh.

16. Handschuh nach einem der Ansprüche 1 bis 14 zur Verwendung als Reinigungs- und Pflegehandschuh für glatte Oberfläche, insbesondere zur Reinigung von lackierten Oberflächen.

17. Tierfellpflegeset mit einem Handschuh gemäss einem der Ansprüche 1 bis 14, sowie einer Spraydose (31) zur Aufnahme einer Nähr- und/oder Pflegelösung für ein Tierfell.

18. Tierfellpflegeset mit einem Handschuh gemäss einem der Ansprüche 1 bis 14, sowie einer Spraydose (31) und einer Nähr- und/oder Pflegelösung für ein Tierfell.

19. Tierfellpflegeset nach Anspruch 18, **dadurch gekennzeichnet, dass** die Nähr- und/oder Pflegelösung wässrig ist.

## Claims

1. Cleaning glove with two different cleaning surfaces, a first cleaning surface (13) which is trimmed with fibers (15) and a second cleaning surface (17) different from the first cleaning surface (13) which is trimmed with a brush-type trimming (19) made of a multitude of bristle tufts placed spaced from each other,
**characterized in**
**that** the fibers of the first cleaning surface (13) are microfibers (15) and the bristle tufts are formed by ribbon yarn or multifilament yarn, whereby the ribbon yarn or multifilament yarn is fanned open or split up into a multitude of single small bristles.

2. Glove according to claim 1, **characterized in that** the first cleaning side (13) of the glove has a pile of microfibers (15).

3. Glove according to claim 2, **characterized in that** the microfibers (15) of the microfiber pile have a thickness of maximal 5 dtex, preferably up to maximal 2dtex and particularly preferably a thickness of maximal 1dtex.

4. Glove according to any of the claims 1 to 3, **characterized in that** the first cleaning side (13) is trimmed with (pile) threads or slings (loops) made of microfibers.

5. Glove according to any of the claims 1 to 4, **characterized in that** the microfibers have in stretched condition a length between 7 and 15 mm.

6. Glove according to any of the claims 1 to 5, **characterized in that** the brush-type trimming (19) has bristles of polyester, polyamide or polypropylene.

7. Glove according to any of the claims 1 to 6, **characterized in that** a bristle tuff has on average at least 10, preferably more than 20 and particularly preferably between 5 and 50 small bristles.

8. Glove according to any of the claims 1 to 7, **characterized in that** at least one loop is provided on at least one inner side of the glove, loop into which one hand or several single fingers can be stuck.

9. Glove according to claim 8, **characterized in that** the loop (29) is made of a textile band or of a synthetic band.

10. Glove according to claim 8 or 9, **characterized in that** the loop (29) is made of a ductile or elastic band.

11. Glove according to any of the claims 8 to 10, **characterized in that** the loop (29) is less wide than the opening for the introduction of the hand.

12. Glove according to any of the claims 8 to 11, **characterized in that** the loop (29) is placed in the front half of the glove and spaced to the glove tip.

13. Glove according to any of the claims 1 to 12, **characterized in that** the glove is made of two layers which are connected with each other on three peripheral sides.

14. Glove according to any of the claims 1 to 13, **characterized in that** at least one loop (29) is placed respectively on each of the two inner sides of the glove.

15. Glove according to any of the claims 1 to 14 for the use as a glove for animal skin care.

16. Glove according to any of the claims 1 to 14 for the use as cleaning and care glove for smooth surface, in particular for cleaning lacquered surfaces.

17. Set for animal skin care with a glove according to any of the claims 1 to 4 as well as a sprayer (31) for picking up a nutrient and/or care solution for an animal skin.

18. Set for animal skin care with a glove according to any of the claims 1 to 14 as well as a sprayer (31) and a nutrient and/or care solution for an animal skin.

19. Set for animal skin care according to claim 18, **characterized in that** the nutrient and/or care solution is aqueous.

## Revendications

1. Gant de nettoyage avec deux surfaces de nettoyage différentes, une première surface de nettoyage (13) qui est garnie de fibres (15) et une seconde surface de nettoyage (17), différente de la première surface de nettoyage (13), qui est garnie d'une garniture de type brosse (19) constituée par une multitude de touffes de poils placées espacées les unes des autres,
**caractérisé en ce**
**que** les fibres de la première surface de nettoyage (13) sont des microfibres (15) et les touffes de poils sont formées par du fil ruban ou du fil multifilament, le fil ruban ou le fil multifilament étant ouvert en éventail ou fendu en une multitude de petits poils individuels.

2. Gant selon la revendication 1, **caractérisé en ce que** le premier côté de nettoyage (13) du gant présente un poil en microfibres (15).

3. Gant selon la revendication 2, **caractérisé en ce que** les microfibres (15) du poil de microfibres présentent une épaisseur de 5dtex maximum, de préférence de 2 dtex maximum et de manière particulièrement préférée d'1 dtex maximum.

4. Gant selon l'une des revendications 1 à 3, **caractérisé en ce que** le premier côté de nettoyage (13) est garni de fils (polaires) ou de boucles (noeuds coulants) formés par des microfibres.

5. Gant selon l'une des revendications 1 à 4, **caractérisé en ce que** les microfibres possèdent à l'état étiré une longueur entre 7 et 15 mm.

6. Gant selon l'une des revendications 1 à 5, **caractérisé en ce que** la garniture de type brosse (19) a des poils en polyester, polyamide ou polypropylène.

7. Gant selon l'une des revendications 1 à 6, **caractérisé en ce qu'**une touffe de poils a en moyenne au moins 10, de préférence plus de 20 et de manière particulièrement préférée entre 5 et 50 petits poils.

8. Gant selon l'une des revendications 1 à 7, **caractérisé en ce qu'**au moins une boucle est prévue sur au moins un côté intérieur du gant, boucle dans laquelle une main ou plusieurs doigts séparés peuvent passer.

9. Gant selon la revendication 8, **caractérisé en ce que** la boucle (29) est constituée par une bande textile ou une bande en matière synthétique.

10. Gant selon la revendication 8 ou 9, **caractérisé en ce que** la boucle (29) est constituée par une bande souple ou élastique.

11. Gant selon l'une des revendications 8 à 10, **caractérisé en ce que** la boucle (29) est moins large que l'ouverture pour introduire la main.

12. Gant selon l'une des revendications 8 à 11, **caractérisé en ce que** la boucle (29) est placée dans la moitié antérieure du gant et espacée de la pointe du gant.

13. Gant selon l'une des revendications 1 à 12, **caractérisé en ce que** le gant est constitué par deux couches qui sont reliées l'une à l'autre sur trois côtés périphériques.

14. Gant selon l'une des revendications 1 à 13, **caractérisé en ce qu'**au moins une boucle (29) est respectivement placée sur chacun des deux côtés intérieurs du gant.

15. Gant selon l'une des revendications 1 à 14 pour l'utilisation comme gant de soin pour le pelage d'animaux.

16. Gant selon l'une des revendications 1 à 14 pour l'utilisation comme gant de nettoyage et de soin pour des surfaces lisses, en particulier pour le nettoyage de surfaces laquées.

17. Set de soin pour pelage d'animaux avec un gant selon l'une des revendications 1 à 14 ainsi qu'une bombe aérosol pour prendre une solution nutritive et/ou une solution de soin pour pelage d'animal.

18. Set de soin pour pelage d'animaux avec un gant selon l'une des revendications 1 à 14 ainsi qu'une bombe aérosol et une solution nutritive et/ou de soin pour pelage d'animal.

19. Set de soin pour pelage d'animaux selon la revendication 18, **caractérisé en ce que** la solution nutritive et/ou de soin est aqueuse.
